# DEMANDE DE BREVET EUROPEEN

(11) **EP 4 684 623 A1**
(43) Date de publication de la demande: **28.01.2026**
(21) Numéro de dépôt: 25186640.6
(22) Date de dépôt: 01.07.2025
(51) Int. Cl.: A01C 7/04, A01C 15/00

(54) **ENSEMBLE POUR UN SEMOIR COMPRENANT AU MOINS UN ÉLÉMENT SEMEUR, DISPOSITIF DE RANGEMENT D'UNE PORTE ET SEMOIR ASSOCIÉS**

(30) Priorité: 25.07.2024 FR 2408223
(71) Demandeur: Kuhn SAS, 67700 Saverne (FR)
(72) Inventeur: GERARD, Vincent, 57635 Brouviller (FR); CHANET, Adrien, 67170 Brumath (FR)

(57) **Abrégé**

L'invention concerne un ensemble pour un semoir comprenant un élément semeur et une trémie (2), l'élément semeur comprenant un dispositif de distribution et un élément de châssis relié au dispositif de distribution, le dispositif de distribution comprenant un boîtier étanche comprenant une partie fixe et une porte (7) mobile amovible entre une position d'ouverture dans laquelle la porte (7) est retirée de la partie fixe et une position de fermeture, un organe de distribution d'une pluralité d'éléments granulaires agencé pour distribuer de façon discrète et singulière une pluralité d'éléments granulaires, l'ensemble est caractérisé en ce qu'il comprend un dispositif de rangement (9) de la porte (7) configuré pour permettre le montage amovible de la porte (7) avec la trémie (2) et/ou l'élément de châssis dans la position d'ouverture de la porte (7).

## Description

La présente invention concerne le domaine des ensembles pour un semoir comprenant au moins un élément semeur, le domaine des dispositifs de rangement d'une porte et le domaine des semoirs.

L'invention concerne ainsi plus généralement le domaine du semis monograine qui est aussi appelé semis de précision, c'est-à-dire le semis en rangs de graines une par une. Le semis monograine trouve son application dans les cultures du maïs, de la betterave, du soja ou similaire.

Un semoir monograine se présente généralement sous la forme d'un châssis-poutre sur lequel viennent se fixer des éléments semeurs qui le plus souvent sont compris entre 4 et 12, voire plus, grâce à un parallélogramme. L'espacement entre ces éléments semeurs varie selon les cultures, de préférence entre 37,5 centimètres et 80 centimètres, mais permet de former des rangs bien distincts. Pour cette raison, il est commun dans ce cas de parler de cultures en rangs, par opposition aux cultures comme le blé où l'espacement est beaucoup plus faible.

De manière connue, un dispositif de distribution de semoir monograine fonctionne globalement de la manière énoncée ci-après.

Un boîtier étanche en deux parties comporte un disque de distribution perforé entrainé en rotation de préférence par un moteur qui forme un organe de distribution d'une pluralité d'éléments granulaires. Le disque de distribution sépare le boîtier en deux chambres dans lesquelles les pressions d'air sont différentes, une différence de pression qui peut être positive ou négative est donc créée de part et d'autre du disque de distribution perforé. Le boîtier est relié à une soufflerie qui permet de gérer la différence de pression selon le type de graine, la vitesse d'avance, et d'autres paramètres.

En bas du disque de distribution perforé, c'est-à-dire au fond du boîtier se trouve une zone de réserve d'éléments granulaires, par exemple des graines, qui est le plus souvent approvisionnée par une trémie. Ces graines sont en contact avec le disque de distribution perforé en rotation, qui, au fur et à mesure de sa rotation, va entrainer les graines une par une dans ses perforations.

Le diamètre et la forme des perforations du disque de distribution sont faits de manière à pouvoir accueillir un seul élément granulaire par exemple une graine, le maintien de l'élément granulaire dans la perforation se fait grâce à la différence de pression entre les deux côtés du disque de distribution. Les perforations sont souvent bordées de formes spéciales qui sont par exemple en relief et/ou en creux et sont aménagées dans le disque de distribution de sorte à guider et/ou orienter les graines vers la perforation. Ces zones autour des perforations sont appelées communément agitateurs.

Une fois les graines distribuées dans les perforations du disque de distribution, un système dit de sélection permet d'éliminer les graines qui sont en trop pour éviter les doubles, car il peut arriver que plusieurs graines viennent se loger dans une seule perforation ce qui n'est pas souhaitable. La sélection peut se faire grâce à des dents, des brosses, ou similaires qui sont montées fixes et sont situées à l'extérieur et/ou à l'intérieur du parcours des graines. Il en résulte que les graines excédentaires retombent dans la zone de réserve.

Une fois les graines sélectionnées, elles sont transportées vers la dernière zone de la distribution qui est généralement située dans le dernier quart de tour du disque de distribution, où la différence de pression n'est plus présente. Il résulte de cette absence de différence de pression que la graine sort de la perforation et sort de la distribution vers le sol. L'éjection de la graine peut être assistée par une roulette qui permet de couper la différence de pression et éventuellement de pousser la graine en dehors de la perforation à l'aide de picots.

Dans certaines situations, la porte mobile du boîtier étanche doit être ouverte par exemple pour changer le disque de distribution et/ou pour réaliser une opération de nettoyage et/ou de maintenance et/ou une vidange des graines et/ou des réglages de fonctionnement du dispositif de distribution.

Pour ce faire, dans le dispositif de distribution, l'opérateur dévisse la porte mobile de la partie fixe à la main d'un certain angle par exemple un huitième de tour. Une fois dévissée et donc dans une position d'ouverture, l'opérateur se retrouve donc avec la porte mobile dans les mains et il la pose généralement au sol pour avoir les mains libres afin de travailler sur la partie fixe du boitier.

La porte mobile se retrouve donc exposée à la poussière, aux salissures, etc. L'opérateur peut même marcher dessus par inadvertance, ce qui peut présenter un risque pour sa sécurité et évidemment endommager la porte mobile.

S'il essaie de la poser en équilibre sur le couvercle de la trémie, alors celle-ci n'est pas maintenue en place de manière stable et sûre, et risque de tomber au sol, ce qui l'abimera ainsi que les composants se trouvant dans la porte mobile.

L'opérateur peut, en théorie, aller ranger la porte dans un coffre de rangement situé à l'avant du semoir ou sur le tracteur mais cette solution n'est pas pratique, d'autant plus qu'il devra le faire pour chaque élément semeur, certaines machines peuvent en avoir une vingtaine, ce qui est particulièrement fastidieux.

La publication EP4335271A1 illustre ces inconvénients du fait que la porte est totalement démontable et qu'aucune solution de rangement n'est prévue.

Le document EP2683231B1 illustre un ensemble de distribution qui présente les inconvénients cités précédemment, il dispose d'une porte entièrement démontable de la partie fixe du boitier de distribution sans prévoir de solution de rangement.

Le document DE102017128854A1 illustre un ensemble de distribution avec des moyens de verrouillage rapide utilisés pour monter un adaptateur sur une ouverture présente sur la porte. Il présente cependant toujours les inconvénients précédents, à savoir qu'aucune solution de rangement n'est prévue pour la porte.

La présente invention a pour but de pallier au moins l'un de ces inconvénients.

L'invention vise à fournir une solution de rangement de la porte qui soit pratique pour qu'un opérateur puisse ranger la porte aisément et rapidement lorsque celle-ci est dans une position d'ouverture.

A cet effet, l'invention concerne un ensemble pour un semoir comprenant au moins un élément semeur et optionnellement au moins une trémie,
l'élément semeur comprenant au moins :
   - un dispositif de distribution,
   - un élément de châssis configuré pour être monté sur un châssis- poutre du semoir et étant relié au dispositif de distribution,
le dispositif de distribution comprenant au moins:
   - un boîtier étanche comprenant au moins une partie fixe et une porte mobile amovible entre une position d'ouverture dans laquelle la porte est retirée de la partie fixe et une position de fermeture,
   - un organe de distribution d'une pluralité d'éléments granulaires agencé pour distribuer de façon discrète et singulière une pluralité d'éléments granulaires, l'organe de distribution étant disposé à l'intérieur du boîtier pour séparer l'intérieur du boîtier en une première chambre et une deuxième chambre, lesquelles sont distinctes, la première chambre étant configurée pour recevoir tout ou partie de la pluralité d'éléments granulaires, la porte fermant au moins la première chambre ou la deuxième chambre dans sa position de fermeture,
la partie fixe ou la porte du boîtier comprend en outre une arrivée d'éléments granulaires débouchant dans la première chambre,
optionnellement la trémie étant agencée pour stocker une pluralité d'éléments granulaires et étant reliée à l'arrivée d'éléments granulaires au moins par des moyens de conduction,
l'ensemble est caractérisé en ce qu'il comprend en outre au moins un dispositif de rangement de la porte configuré pour permettre le montage amovible de la porte avec la trémie et/ou l'élément de châssis dans la position d'ouverture de la porte.

L'invention concerne également une porte de boîtier de dispositif de distribution pour un ensemble selon l'invention, caractérisée en ce qu'elle comprend le deuxième élément d'accrochage intégré à ou disposé sur la deuxième paroi externe de la porte.

L'invention concerne également une trémie pour un ensemble selon l'invention, caractérisée en ce qu'elle comprend le premier élément d'accrochage intégré à ou disposé sur la première paroi externe de la trémie.

L'invention concerne également un élément semeur pour un ensemble selon l'invention, caractérisé en ce que l'élément de châssis comprend le premier élément d'accrochage.

L'invention concerne également un dispositif de rangement de la porte pour un ensemble selon l'invention, caractérisé en ce qu'il comprend le premier élément d'accrochage configuré pour être intégré à ou disposé sur la première paroi externe de la trémie et/ou sur l'élément de châssis et le deuxième élément d'accrochage configuré pour être intégré à ou disposé sur la deuxième paroi externe de la porte et étant configuré pour être couplé avec le premier élément d'accrochage dans la position de couplage.

L'invention concerne également un semoir comprenant au moins l'ensemble comprenant au moins un élément semeur, au moins une trémie et un châssis-poutre, caractérisé en ce que l'ensemble est selon l'invention.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] la figure 1 représente une vue en perspective du dispositif de distribution selon l'invention d'un ensemble pour semoir selon l'invention comprenant un deuxième élément d'accrochage sous la forme d'un manchon,
[Fig. 2] la figure 2 représente une vue en perspective d'une porte du dispositif de distribution de la figure 1 comprenant le deuxième élément d'accrochage sous la forme d'un manchon,
[Fig. 3] la figure 3 représente une vue de côté de la porte de la figure 2,
[Fig. 4] la figure 4 représente une vue en perspective et de dessous de la porte de la figure 2,
[Fig. 5] la figure 5 représente une vue en perspective d'une variante de la porte du dispositif de distribution comprenant le deuxième élément d'accrochage sous la forme d'un manchon et d'un deuxième aimant,
[Fig. 6] la figure 6 représente une vue en perspective d'une variante de trémie individuelle d'un ensemble pour semoir selon l'invention sans un premier élément d'accrochage,
[Fig. 7] la figure 7 représente une vue de côté d'une variante de trémie individuelle d'un ensemble pour semoir selon l'invention avec un premier élément d'accrochage sous la forme d'un crochet,
[Fig. 8] la figure 8 représente une vue en perspective d'un détail de la figure 7 montrant le premier élément d'accrochage sous la forme de crochet,
[Fig. 9] la figure 9 représente une vue en perspective de la trémie individuelle de la figure 7 et la porte de la figure 2 avec le premier élément d'accrochage et le deuxième élément d'accrochage dans la position de couplage,
[Fig. 10] la figure 10 représente une vue en perspective d'une variante de trémie individuelle d'un ensemble pour semoir selon l'invention avec un premier élément d'accrochage sous la forme d'un premier aimant,
[Fig. 11] la figure 11 représente une vue en perspective d'une variante de trémie intermédiaire d'un ensemble pour semoir selon l'invention sans premier élément d'accrochage,
[Fig. 12] la figure 12 représente une vue en perspective d'une variante de trémie intermédiaire d'un ensemble pour semoir selon l'invention avec un premier élément d'accrochage et la porte avec le deuxième élément d'accrochage, le premier élément d'accrochage et le deuxième élément d'accrochage sont dans la position de couplage,
[Fig. 13] la figure 13 représente une vue en perspective d'un ensemble pour semoir selon une variante de réalisation selon l'invention comprenant la trémie individuelle de la figure 7 et un dispositif de distribution comprenant la porte illustrée à la figure 2,
[Fig. 14] la figure 14 représente une vue en perspective d'un ensemble pour semoir selon une variante de réalisation selon l'invention comprenant la trémie intermédiaire avec le premier élément d'accrochage sous la forme d'un crochet et le dispositif de distribution comprenant la porte illustrée à la figure 2,
[Fig. 15] la figure 15 représente une vue en perspective d'un ensemble pour semoir selon une variante de réalisation selon l'invention comprenant la trémie intermédiaire de la figure 11, le dispositif de distribution comprenant la porte illustrée à la figure 5 et le premier élément d'accrochage sous la forme du premier aimant monté sur un élément de châssis.

Un ensemble pour un semoir comprend au moins un élément semeur 1 et optionnellement au moins une trémie 2, 2',
l'élément semeur 1 comprenant au moins :
   - un dispositif de distribution 3,
   - un élément de châssis 4 configuré pour être monté sur un châssis-poutre du semoir et étant relié au dispositif de distribution 3,
le dispositif de distribution 3 comprenant au moins :
   - un boîtier 5 étanche comprenant au moins une partie fixe 6 et une porte 7 mobile amovible entre une position d'ouverture dans laquelle la porte 7 est retirée de la partie fixe 6 et une position de fermeture POFF,
   - un organe de distribution d'une pluralité d'éléments granulaires agencé pour distribuer de façon discrète et singulière une pluralité d'éléments granulaires, l'organe de distribution étant disposé à l'intérieur du boîtier 5 pour séparer l'intérieur du boîtier 5 en une première chambre et une deuxième chambre, lesquelles sont distinctes, la première chambre étant configurée pour recevoir tout ou partie de la pluralité d'éléments granulaires, la porte 7 fermant au moins la première chambre ou la deuxième chambre dans sa position de fermeture POFF,
la partie fixe 6 ou la porte 7 du boîtier 5 comprend en outre une arrivée d'éléments granulaires débouchant dans la première chambre,
optionnellement la trémie 2, 2' étant agencée pour stocker une pluralité d'éléments granulaires et étant reliée à l'arrivée d'éléments granulaires au moins par des moyens de conduction 8.

Conformément à l'invention, l'ensemble est caractérisé en ce qu'il comprend en outre au moins un dispositif de rangement 9 de la porte 7 configuré pour permettre le montage amovible de la porte 7 avec la trémie 2, 2' et/ou l'élément de châssis 4 dans la position d'ouverture de la porte 7.

Avantageusement, cette configuration permet de prévoir un moyen de rangement de la porte 7 sur certains constituants de l'élément semeur 1 et donc au plus proche de l'opérateur. Lorsqu'elle est retirée de la partie fixe 6 et lors du rangement, la porte 7 peut être montée de manière réversible sur la trémie 2, 2' et/ou sur l'élément de châssis 4. Elle pourra ensuite être démontée de manière réversible de la trémie 2, 2' et/ou de l'élément de châssis 4, puis le cas échéant être replacée sur la partie fixe 6 dans la position de fermeture POFF. Il en résulte que l'invention permet de proposer une solution de rangement de la porte 7 pratique pour qu'un opérateur puisse ranger la porte 7 aisément et rapidement lorsque celle-ci est dans une position d'ouverture. D'autres avantages découlent également de l'invention. En effet, l'opérateur n'a pas besoin de se déplacer loin ou de se contorsionner entre les éléments semeurs 1 pour ranger la porte 7 ce qui génère un gain de temps et de la praticité. La porte 7 reste propre et n'est pas au sol. La solution est adaptable sur tous types de trémies 2, 2' et tous types de configurations de machines. On conserve un accès total au boitier 5 avec une ouverture totale en enlevant la porte 7.

De préférence, le dispositif de rangement 9 de la porte 7 comprend au moins un premier élément d'accrochage 10 intégré à ou disposé sur une première paroi externe 11, 11' de la trémie 2, 2' et/ou de l'élément de châssis 4 et un deuxième élément d'accrochage 12 intégré à ou disposé sur une deuxième paroi externe 13 de la porte 7 et étant configuré pour être couplé avec le premier élément d'accrochage 10 dans une position de couplage PC.

Avantageusement, dans cet exemple préféré le dispositif de rangement 9 permet d'accrocher la porte 7 au niveau de la trémie 2, 2' et/ou de l'élément de châssis 4. Il en résulte que la solution fournit un rangement sûr et stable de la porte 7. Le montage/démontage présente l'avantage de se faire sans utilisation d'outil.

De préférence selon une première variante de réalisation, le premier élément d'accrochage 10 comprend un crochet 14 et le deuxième élément d'accrochage 12 comprend un manchon 15 dans lequel est inséré le crochet 14 dans la position de couplage PC de sorte à réaliser un couplage mécanique.

Avantageusement, l'industrialisation est simple et peu couteuse. En outre, l'ajout du crochet 14 n'induit pas de perte de volume au niveau de la trémie 2, 2'. Avantageusement, le manchon 15 peut également remplir une autre fonction pour le fonctionnement du dispositif de distribution 3. Par exemple, le manchon 15 peut également servir de conduite d'échappement d'air pour le dispositif de distribution 3.

De préférence selon une deuxième variante de réalisation alternative, le premier élément d'accrochage 10 comprend un premier aimant 16 ou une première pièce aimantable et le deuxième élément d'accrochage 12 comprend un deuxième aimant 17 ou une deuxième pièce aimantable, le premier aimant 16 et le deuxième aimant 17 ou le premier aimant 16 et la deuxième pièce aimantable ou la première pièce aimantable et le deuxième aimant 17 étant aimantés l'un à l'autre dans la position de couplage PC de sorte à réaliser un couplage magnétique.

Avantageusement, l'industrialisation est simple et peu couteuse. En outre, l'ajout du premier aimant 16 ou de la première pièce aimantable n'induit pas de perte de volume au niveau de la trémie 2, 2'.

De préférence, l'invention s'étend à un deuxième élément d'accrochage 10 qui comprend un manchon 15 et un deuxième aimant 17.

De préférence, l'ensemble comprend un seul élément semeur 1 associé à une seule trémie 2, 2' individuelle ou intermédiaire et un seul dispositif de rangement 9.

De manière alternative, l'ensemble comprend une pluralité d'éléments semeurs 1 et une pluralité de trémies 2 individuelle et une pluralité de dispositifs de rangement 9, chaque élément semeur 1 étant associé à une trémie 2 de sorte à former un sous-ensemble et comportant un dispositif de rangement 9 dédié pour chaque porte 7.

Avantageusement, dans les deux cas précités à chaque porte 7 est associé un dispositif de rangement 9. Par exemple lors du rangement, chaque porte 7 peut être montée par le dispositif de rangement 9 sur chaque trémie 2 ou chaque porte 7 peut être montée par le dispositif de rangement 9 sur chaque élément de châssis 4. De préférence, chaque porte 7 comporte un deuxième élément d'accrochage 12 et chaque trémie 2 ou chaque élément de châssis 4 comporte un premier élément d'accrochage 10.

De manière alternative, l'ensemble comprend une pluralité d'éléments semeurs 1, un seul réservoir central (non représenté) et une pluralité de trémies 2' intermédiaires, chaque élément semeur 1 étant raccordé au réservoir central et une pluralité de dispositifs de rangement 9, chaque élément semeur 1 étant associé à une trémie 2' intermédiaire de sorte à former un sous-ensemble et comportant un dispositif de rangement 9 dédié pour chaque porte 7.

Avantageusement, dans cette configuration, lors du rangement, chaque porte 7 peut être montée par le dispositif de rangement 9 sur chaque élément de châssis 4 ou la pluralité de porte 7 peut être montée par le dispositif de rangement 9 sur les trémies 2' intermédiaires. Dans ce dernier cas, chaque porte 7 comporte de préférence un deuxième élément d'accrochage 12 et les trémies 2' intermédiaires comportent chacune un premier élément d'accrochage 10.

Selon une variante non représentée possible, l'ensemble peut comprendre une pluralité d'éléments semeurs 1 chacun associés à un même réservoir central et au moins un dispositif de rangement 9. Cette variante n'est toutefois pas compatible avec tous les types de graines, car certains types de graines nécessitent l'utilisation de trémies 2' intermédiaires. Afin d'offrir une solution plus polyvalente la solution avec les trémies 2' intermédiaires est donc préférée.

L'invention concerne également une porte 7 de boîtier 5 de dispositif de distribution 3 pour un ensemble selon l'invention, caractérisée en ce qu'elle comprend le deuxième élément d'accrochage 12 intégré à ou disposé sur la deuxième paroi externe 13 de la porte 7.

L'invention concerne également une trémie pour un ensemble selon l'invention, caractérisée en ce qu'elle comprend le premier élément d'accrochage 10 intégré à ou disposé sur la première paroi externe 11 de la trémie 2, 2'.

L'invention concerne également un élément semeur pour un ensemble selon l'invention, caractérisé en ce que l'élément de châssis 4 comprend le premier élément d'accrochage 10.

L'invention concerne également un dispositif de rangement 9 de la porte 7 pour un ensemble selon l'invention, caractérisé en ce qu'il comprend le premier élément d'accrochage 10 configuré pour être intégré à ou disposé sur la première paroi externe 11, 11' de la trémie 2, 2' et/ou de l'élément de châssis 4 et le deuxième élément d'accrochage 12 configuré pour être intégré à ou disposé sur la deuxième paroi externe 13 de la porte 7 et étant configuré pour être couplé avec le premier élément d'accrochage 10 dans la position de couplage PC.

L'invention concerne également un semoir comprenant au moins l'ensemble comprenant au moins un élément semeur 1, au moins une trémie 2, 2' et un châssis-poutre, caractérisé en ce que l'ensemble est selon l'invention.

L'élément semeur 1 comprend au moins le dispositif de distribution 3 et l'élément de châssis 4.

La trémie 2, 2' permet de stocker des éléments granulaires, par exemple des graines ou des intrants sous forme granulaire. La trémie 2, 2' forme un contenant de préférence fermé par un couvercle 23.

La trémie 2, 2' peut être individuelle ou intermédiaire ou centrale. Dans le cas d'une trémie 2 individuelle, celle-ci est associée à un seul élément semeur 1 et est raccordée à l'arrivée. Si un réservoir central est prévu pour stocker les éléments granulaires, le raccordement à l'arrivée se fait de préférence via une trémie 2' intermédiaire qui est raccordée d'une part à l'arrivée par des moyens de conduction 8 et d'autre part au réservoir central par des moyens de conduction additionnelles 8' de type conduit. De manière alternative, si seulement un réservoir central est prévu sans trémie 2' intermédiaire qui forme une trémie centrale alors le raccordement à l'arrivée se fait par d'autres moyens de conduction de type conduit. De manière encore une fois alternative, une trémie 2 individuelle peut être utilisée en parallèle d'un raccordement entre un réservoir central et les éléments semeurs 1. Dans cette configuration, la trémie 2 individuelle et le réservoir central sont tous les deux reliés à l'arrivée de graines. Leur utilisation est alors sélective, en fonction du type de graines à semer. Il peut être avantageux d'utiliser une alimentation de graines via un réservoir central lors du semis de certains types de graines et une alimentation par trémie 2 individuelle 2 pour le semis d'autres types de graines. Ces situations sont définies par les caractéristiques des graines à semer, par exemple leurs dimensions ou la présence d'enrobages et/ou de traitements sur les graines ou non. Dans cette configuration alternative, la trémie 2 individuelle peut présenter des dimensions proches des trémies 2 individuelles utilisées dans les autres configurations, ou être de taille réduite, par exemple avec des dimensions similaires aux trémies 2' intermédiaires.

Le dispositif de distribution 3 comprend le boîtier 5 et l'organe de distribution qui se présente de préférence usuellement sous la forme d'un disque de distribution perforé entrainé en rotation de préférence par un moteur. Le disque de distribution sépare le boitier en deux chambres, la première chambre et la deuxième chambre, dans lesquelles les pressions d'air sont de préférence différentes. La première chambre et la deuxième chambre ont préférentiellement une forme sensiblement cylindrique. La porte 7 reçoit de préférence le disque de distribution, mais cet exemple n'est pas limitatif.

Le boîtier 5 comprend la partie fixe 6 et la porte 7 qui est mobile par rapport à la partie fixe 6 et permet d'ouvrir le boîtier 5 pour donner accès à l'intérieur du boîtier 5 ou de le fermer. La porte 7 adopte ainsi soit une position d'ouverture, soit une position de fermeture POFF. Dans la position d'ouverture, la porte 7 peut être totalement retirée de la partie fixe 6. La porte 7 est de préférence de forme cylindrique et présente un fond plat.

L'élément de châssis 4 est relié mécaniquement au dispositif de distribution 3 de préférence à la partie fixe 6 du boîtier 5. Il comprend de préférence au moins un parallélogramme d'accrochage 31 configuré pour être relié au châssis poutre (non représenté) et de manière optionnelle un berceau support 30 configuré pour être relié à la trémie 2, 2'.

Les moyens de conduction 8 ont pour fonction de relier la trémie 2, 2' à la première chambre (non représentée) du boîtier 5 et débouchent ainsi sur l'arrivée (non représentée). Les moyens de conduction 8 comporte de préférence au moins un conduit et préférentiellement un conduit inférieur (non représenté) et un conduit supérieur 8a. Le conduit inférieur débouche dans la première chambre par l'arrivée. Le conduit supérieur 8a est prévu pour être relié à la trémie 2, 2' et au conduit inférieur.

Le dispositif de rangement 9 a pour fonction de permettre le montage et le démontage de la porte 7 de manière réversible sur la trémie 2, 2' et/ou sur l'élément de châssis 4.

Dans un exemple préféré, le dispositif de rangement 9 comprend de préférence un sous-ensemble comportant le premier élément d'accrochage 10 et le deuxième élément d'accrochage 12. Dans ce cas, le montage/démontage présente l'avantage de se faire sans utilisation d'outil. Cet exemple n'est pas limitatif et d'autres solutions pourraient être prévues impliquant notamment l'utilisation d'outil comme un montage par vis.

Le premier élément d'accrochage 10 et le deuxième élément d'accrochage 12 sont prévus pour coopérer entre eux dans la position de couplage PC et ont pour fonction de permettre l'accrochage de la porte 7 à la trémie 2, 2' et/ou à l'élément de châssis 4.

La première paroi externe 11 de la trémie 2, 2' présente de préférence quatre faces externes latérales 18, 19, 19', 20, une face externe inférieure 21 et une face externe supérieure 22. La face externe supérieure 22 est de préférence pourvue du couvercle 23. La face externe supérieure 22 peut comprendre une entrée 29 raccordée aux moyens de conduction additionnelles 8'. La face externe inférieure 21 comprend de préférence une sortie 26 qui peut être raccordée aux moyens de conduction 8 et notamment au conduit supérieur 8a.

De préférence, le premier élément d'accrochage 10 est monté sur la face externe inférieure. Il en résulte une facilité d'accès lorsque l'opérateur est en face du dispositif de distribution 3. De manière alternative, le premier élément d'accrochage 10 peut être monté sur l'une des faces externes latérales, la face externe supérieure ou sur le couvercle.

La première paroi externe 11' de l'élément de châssis 4 comprend une paroi externe du parallélogramme d'accrochage 31 et/ou du berceau support 30.

De préférence, le premier élément d'accrochage 10 est monté sur la paroi externe du parallélogramme d'accrochage 31 et/ou du berceau support 30.

La deuxième paroi externe 13 de la porte 7 présente de préférence une forme globalement de cylindre circulaire avec un fond.

De préférence, le deuxième élément d'accrochage 12 est monté sur le côté extérieur du fond.

Le premier élément d'accrochage 10 et/ou le deuxième élément d'accrochage 12 peuvent être fixés respectivement à la première paroi externe 11, 11' et à la deuxième paroi externe 13 par des moyens de fixation.

Dans ce cas, le premier élément d'accrochage 10 et le deuxième élément d'accrochage 12 sont des pièces rapportées respectivement à la porte 7 et à la trémie 2, 2' et/ou à l'élément de châssis 4.

Le crochet 14 peut comprendre une section de montage 27 raccordée à la première paroi externe 11 de la trémie 2, 2' et/ou de l'élément de châssis 4 par exemple par vissage et une section d'insertion 28 qui repose sur la première paroi externe 11 et s'étend à la verticale. La section de montage 27 peut présenter une forme de U et la section d'insertion 28 la forme d'une dent centrée sur la base du U.

Le manchon 15 présente préférentiellement un canal 24 dans lequel la section d'insertion 28 du crochet 14 peut être insérée.

Le manchon 15 est de préférence une pièce rapportée qui est fixée à la deuxième paroi externe 13 de la porte 7 par vissage.

Le canal 24 et la section d'insertion 28 présentent à cet effet des formes complémentaires.

Le premier aimant 16 ou le deuxième aimant 17 sont sous la forme de plaque de forme carrée par exemple.

Le deuxième aimant 17 est monté sur la paroi extérieure 25 du manchon 15 par exemple par collage ou par vissage.

La première pièce aimantable est de préférence une portion de la trémie 2 et/ou de l'élément de châssis 4 qui est en matériau ferromagnétique.

La deuxième pièce aimantable est de préférence une portion de la porte 7 réalisée en matériau ferromagnétique.

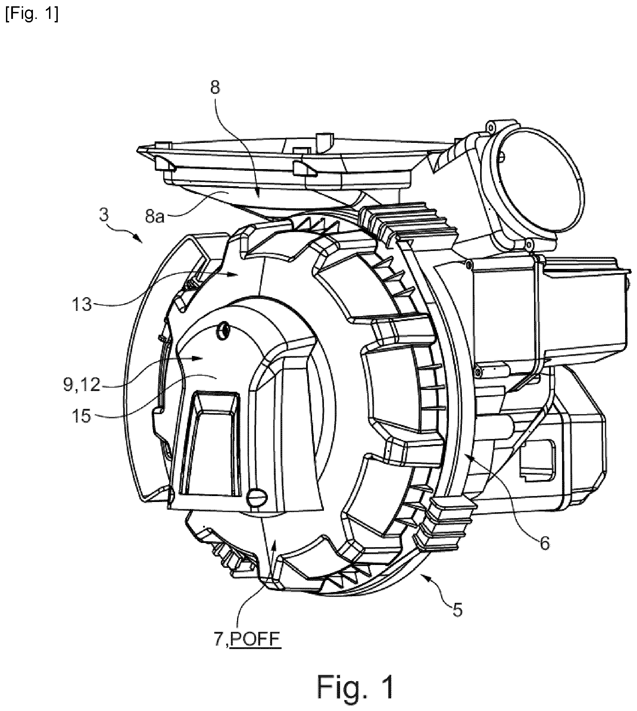

La figure 1 illustre le dispositif de distribution 3 selon l'invention de l'ensemble pour semoir selon l'invention. Le dispositif de distribution 3 comprend le boîtier 5 étanche comprenant la partie fixe 6 et la porte 7 mobile amovible qui est dans la position de fermeture POFF. En outre, le deuxième élément d'accrochage 12 est disposé sur la deuxième paroi externe 13 de la porte 7 et se présente sous la forme d'un manchon 15. Le manchon 15 est une pièce rapportée qui est fixée à la deuxième paroi externe 13 de la porte 7 par vissage. Les moyens de conduction 8 sont également visibles et sont raccordés à la première chambre du boîtier 5. Le conduit supérieur 8a est prévu pour être relié à la sortie 26 de la trémie 2, 2' et au conduit inférieur qui débouche sur l'arrivée.

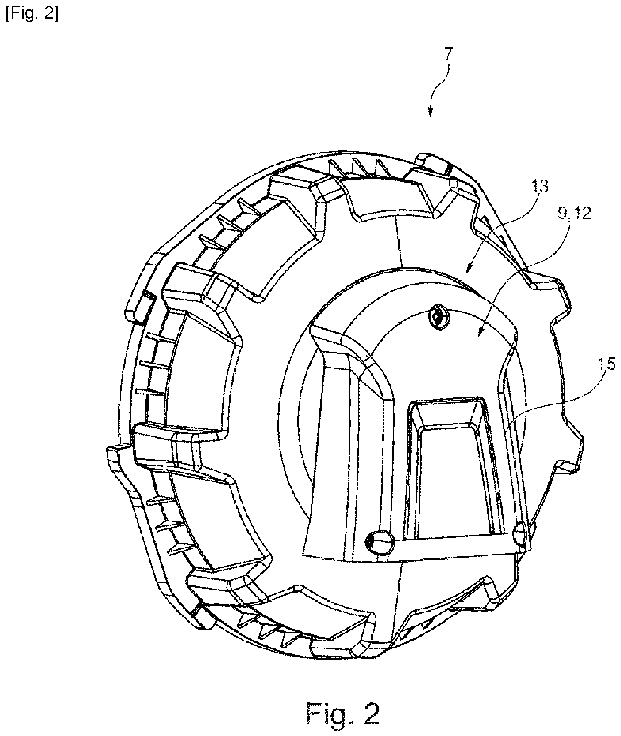

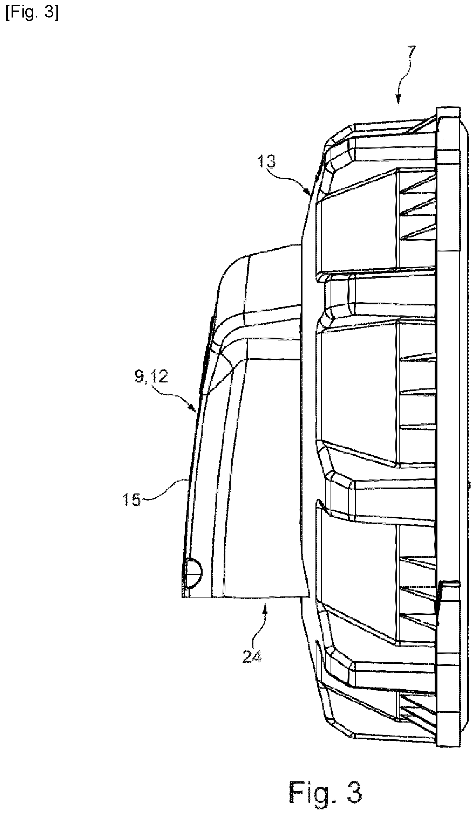

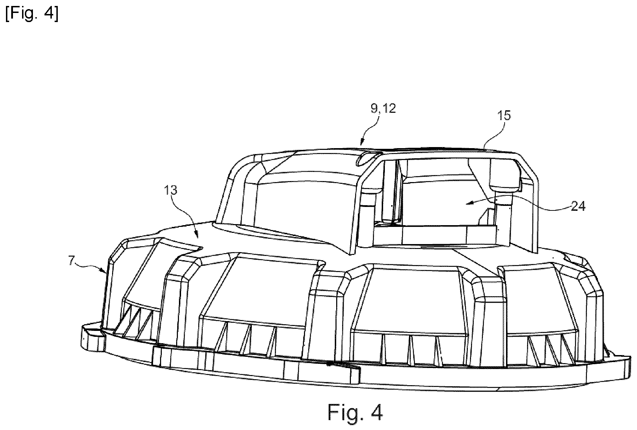

Les figures 2 à 4 illustrent la porte 7 mobile visible à la figure 1 avec le deuxième élément d'accrochage 12 qui est disposé sur la deuxième paroi externe 13 de la porte 7 et se présente sous la forme d'un manchon 15. Le manchon 15 est une pièce rapportée qui est fixée à la deuxième paroi externe 13 de la porte 7 par vissage. Le manchon 15 présente le canal 24.

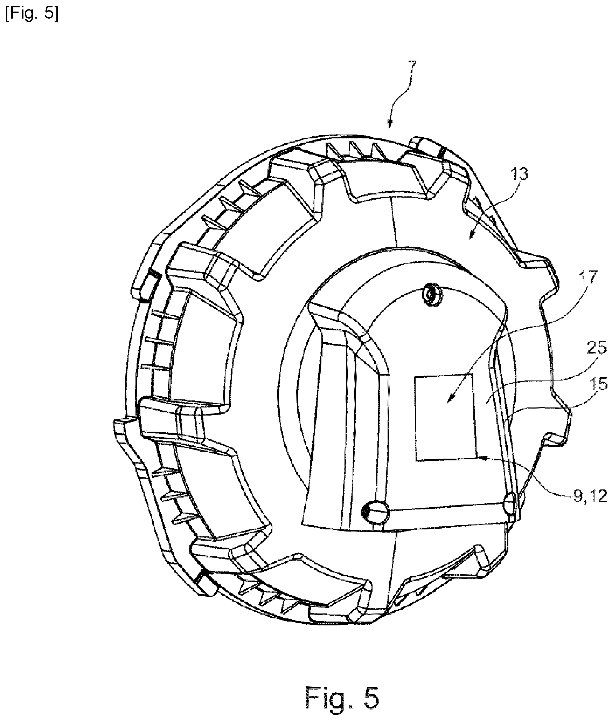

La figure 5 illustre une autre variante possible de la porte 7 avec le deuxième élément d'accrochage 12 qui est disposé sur la deuxième paroi externe 13 de la porte 7 et se présente sous la forme d'un manchon 15 et d'un deuxième aimant 17. Le manchon 15 est une pièce rapportée qui est fixée à la deuxième paroi externe 13 de la porte 7 par vissage. Le deuxième aimant 17 est monté sur la paroi extérieure 25 du manchon 15.

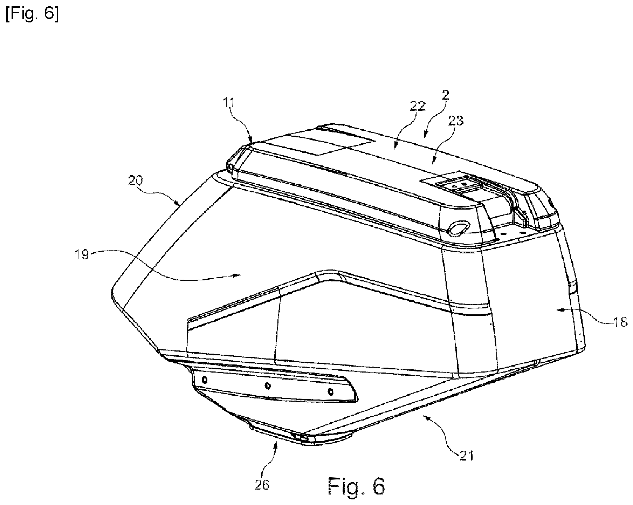

La figure 6 illustre une variante de trémie 2 individuelle d'un ensemble pour semoir selon l'invention sans un premier élément d'accrochage 10. La première paroi externe 11 de la trémie 2 présente quatre faces externes latérales 18, 19, 20, une face externe inférieure 21 et une face externe supérieure 22. La face externe supérieure 22 est pourvue du couvercle 23. La face externe inférieure 21 comprend la sortie 26 qui peut être raccordée aux moyens de conduction 8.

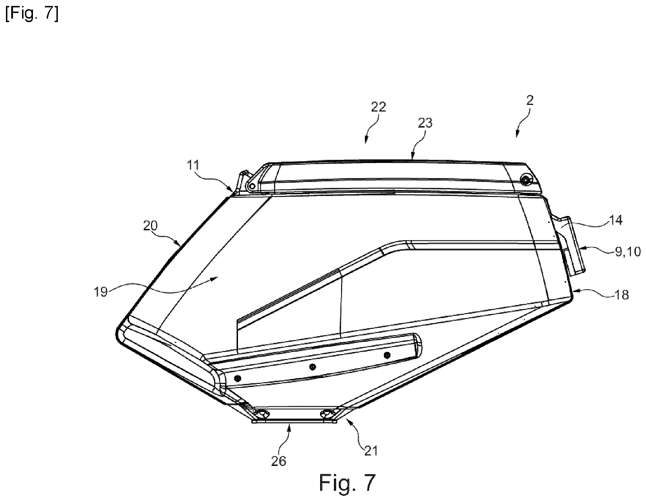

La figure 7 illustre une variante de trémie 2 individuelle d'un ensemble pour semoir selon l'invention avec un premier élément d'accrochage 10 sous la forme du crochet 14. Cette variante diffère de celle de la figure 6 par l'ajout du crochet 14 qui est monté sur la face externe latérale antérieure 18.

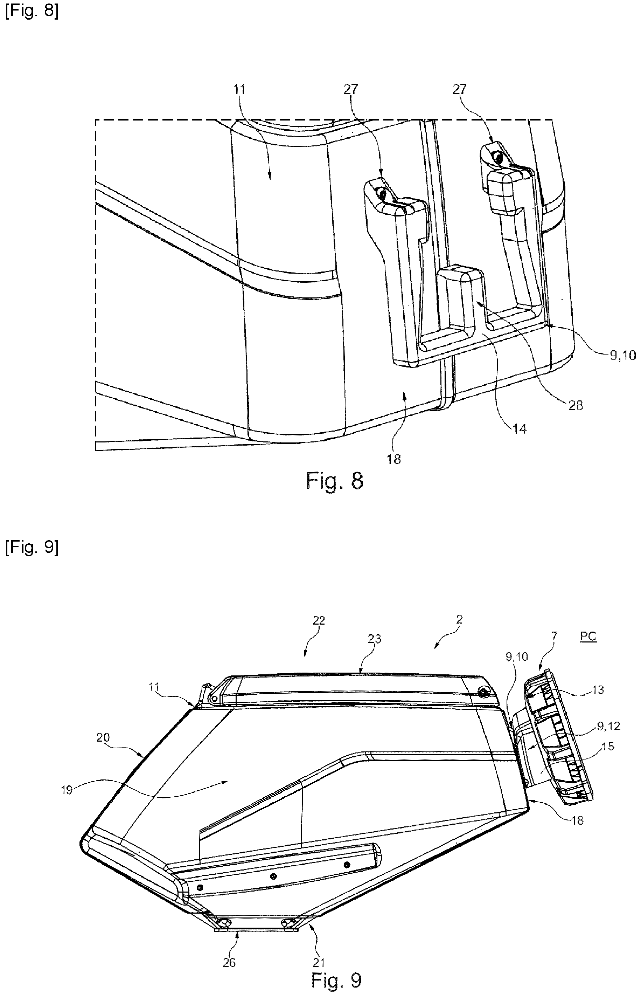

La figure 8 illustre en détail le premier élément d'accrochage 10 sous la forme du crochet 14. Le crochet 14 comprend la section de montage 27 monté sur la face externe latérale antérieure 18 de la première paroi externe 11 par vissage et la section d'insertion 28 s'étendant à la verticale qui repose sur la face externe latérale antérieure 18 de la première paroi externe 11. La section de montage 27 présente une forme de U et la section d'insertion 28 la forme d'une dent centrée sur la base du U.

La figure 9 illustre la trémie 2 individuelle de la figure 7 et la porte 7 de la figure 2 avec le premier élément d'accrochage 10 et le deuxième élément d'accrochage 12 dans la position de couplage PC. Le dispositif de rangement 9 de la porte 7 permet le montage amovible de la porte 7 avec la trémie 2 individuelle.

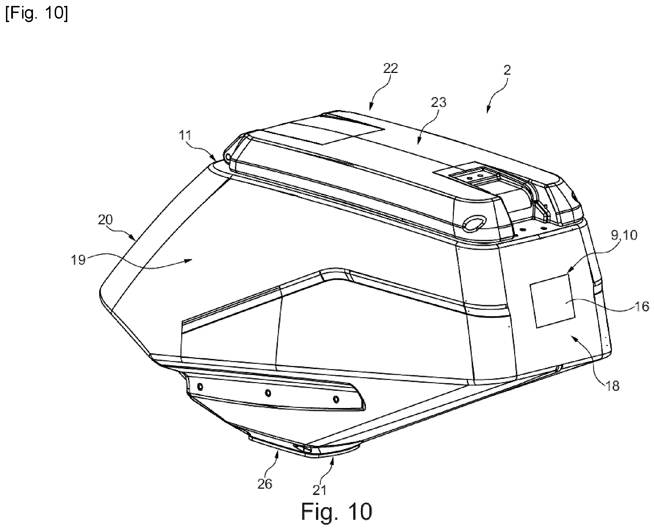

La figure 10 illustre une variante de trémie 2 individuelle d'un ensemble pour semoir selon l'invention avec un premier élément d'accrochage 10 sous la forme du premier aimant 16. Cette variante diffère de celle de la figure 6 par l'ajout d'un premier aimant 16 qui est monté sur la face externe latérale antérieure 18.

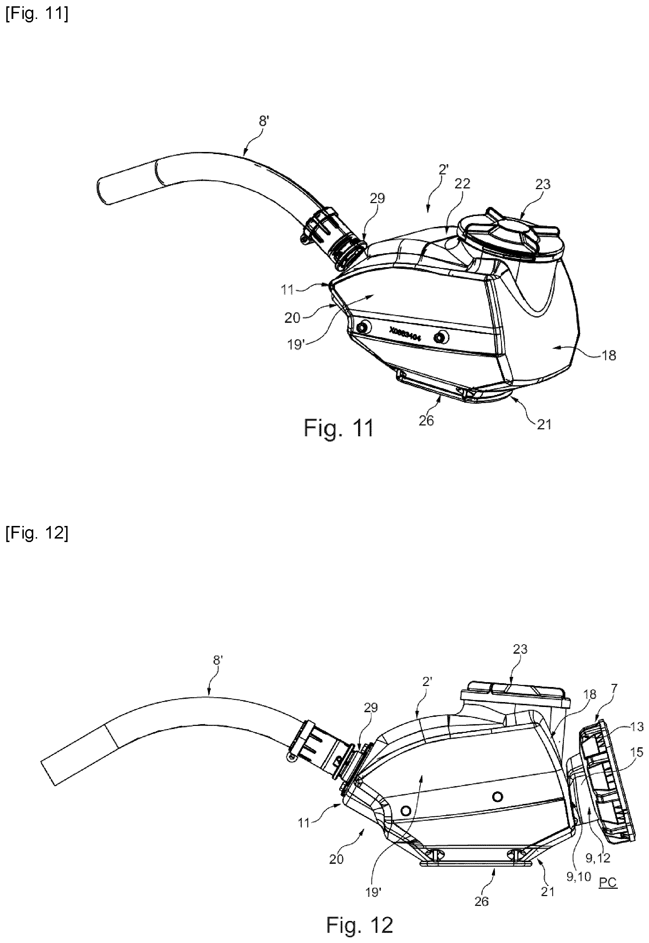

La figure 11 représente une vue en perspective d'une variante de trémie 2' intermédiaire d'un ensemble pour semoir selon l'invention sans premier élément d'accrochage. La première paroi externe 11 de la trémie 2' intermédiaire présente quatre faces externes latérales 18, 19', 20, une face externe inférieure 21 et une face externe supérieure 22. La face externe supérieure 22 est pourvue du couvercle 23 et d'une entrée 29 raccordée aux moyens de conduction additionnelles 8'. La face externe inférieure 21 comprend la sortie 26 qui peut être raccordée aux moyens de conduction 8 et notamment au conduit supérieur 8a.

La figure 12 représente une vue en perspective d'une variante de trémie 2' intermédiaire d'un ensemble pour semoir selon l'invention avec un premier élément d'accrochage 10 et la porte 7 avec le deuxième élément d'accrochage 12. La trémie 2' intermédiaire diffère de celle de la figure 11 par l'ajout d'un premier élément d'accrochage 10 qui est monté sur la face latérale antérieure 18. Le premier élément d'accrochage 10 et le deuxième élément d'accrochage 12 sont dans la position de couplage PC. Le dispositif de rangement 9 de la porte 7 permet le montage amovible de la porte 7 avec la trémie 2' intermédiaire.

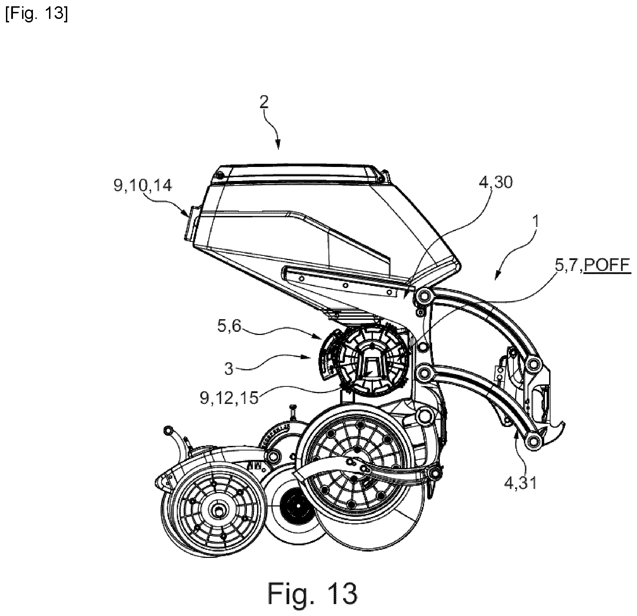

La figure 13 illustre un ensemble pour semoir selon une variante de réalisation selon l'invention comprenant notamment la trémie 2 individuelle de la figure 7 avec le premier élément d'accrochage 10 sous la forme d'un crochet 14 et un élément semeur 1 comprenant un élément de châssis 4 et notamment le dispositif de distribution 3 comprenant la porte 7 illustrée à la figure 2 dans la position de fermeture POFF avec un deuxième élément d'accrochage 12 sous la forme d'un manchon 15. La trémie 2 individuelle est montée sur l'élément de châssis 4 formant un berceau support 30. L'élément de châssis 4 comprend en outre un parallélogramme d'accrochage 31 configuré pour être relié au châssis poutre.

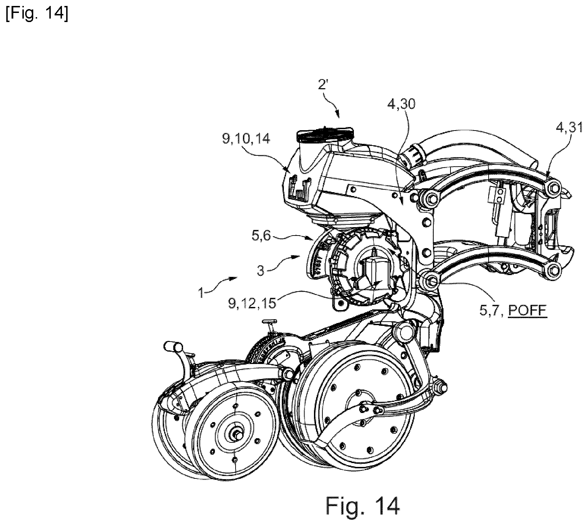

La figure 14 illustre un ensemble pour semoir selon une variante de réalisation selon l'invention comprenant la trémie 2' intermédiaire avec le premier élément d'accrochage 10 sous la forme d'un crochet 14 et un élément semeur 1 comprenant un élément de châssis 4 et notamment le dispositif de distribution 3 comprenant la porte 7 illustrée à la figure 2 dans la position de fermeture POFF avec un deuxième élément d'accrochage 12 sous la forme d'un manchon 15. La trémie 2' intermédiaire est montée sur l'élément de châssis 4 formant un berceau support 30. L'élément de châssis 4 comprend en outre un parallélogramme d'accrochage 31 configuré pour être relié au châssis poutre.

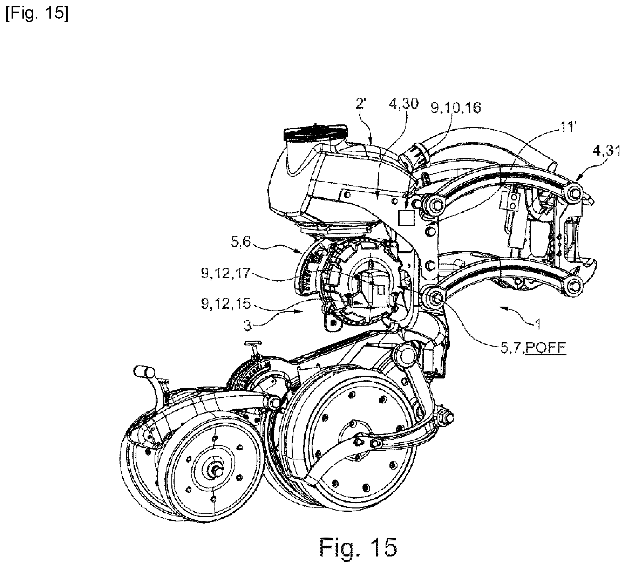

La figure 15 illustre un ensemble pour semoir selon une variante de réalisation selon l'invention comprenant la trémie 2' intermédiaire de la figure 11 et un élément semeur 1 comprenant notamment un élément de châssis 4 et le dispositif de distribution 3 comprenant la porte 7 illustrée à la figure 5 dans la position de fermeture POFF avec un deuxième élément d'accrochage 12 sous la forme d'un manchon 15 et d'un deuxième aimant 17. La trémie 2' intermédiaire est montée sur l'élément de châssis 4 formant un berceau support 30 et le premier élément d'accrochage 10 sous la forme du premier aimant 16 est monté sur la paroi externe de cet élément de châssis 4 formant le berceau support 30 et correspondant à la première paroi externe 11'. L'élément de châssis 4 comprend en outre un parallélogramme d'accrochage 31 configuré pour être relié au châssis poutre.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Ensemble pour un semoir comprenant au moins un élément semeur (1) et optionnellement au moins une trémie (2, 2'),
l'élément semeur (1) comprenant au moins :
- un dispositif de distribution (3),
- un élément de châssis (4) configuré pour être monté sur un châssis- poutre du semoir et étant relié au dispositif de distribution (3),
le dispositif de distribution (3) comprenant au moins:
- un boîtier (5) étanche comprenant au moins une partie fixe (6) et une porte (7) mobile amovible entre une position d'ouverture dans laquelle la porte (7) est retirée de la partie fixe (6) et une position de fermeture (POFF),
- un organe de distribution d'une pluralité d'éléments granulaires agencé pour distribuer de façon discrète et singulière une pluralité d'éléments granulaires, l'organe de distribution étant disposé à l'intérieur du boîtier (5) pour séparer l'intérieur du boîtier (5) en une première chambre et une deuxième chambre, lesquelles sont distinctes, la première chambre étant configurée pour recevoir tout ou partie de la pluralité d'éléments granulaires, la porte (7) fermant au moins la première chambre ou la deuxième chambre dans sa position de fermeture (POFF),
la partie fixe (6) ou la porte (7) du boîtier (5) comprend en outre une arrivée d'éléments granulaires débouchant dans la première chambre,
- optionnellement la trémie (2, 2') étant agencée pour stocker une pluralité d'éléments granulaires et étant reliée à l'arrivée d'éléments granulaires au moins par des moyens de conduction (8),
l'ensemble est **caractérisé en ce qu'**il comprend en outre au moins un dispositif de rangement (9) de la porte (7) configuré pour permettre le montage amovible de la porte (7) avec la trémie (2, 2') et/ou l'élément de châssis 4 dans la position d'ouverture de la porte (7).

2. Ensemble selon la revendication 1, **caractérisé en ce que** le dispositif de rangement (9) de la porte (7) comprend au moins un premier élément d'accrochage (10) intégré à ou disposé sur une première paroi externe (11, 11') de la trémie (2, 2') et/ou de l'élément de châssis (4) et un deuxième élément d'accrochage (12) intégré à ou disposé sur une deuxième paroi externe (13) de la porte (7) et étant configuré pour être couplé avec le premier élément d'accrochage (10) dans une position de couplage (PC).

3. Ensemble selon la revendication 2, **caractérisé en ce que** le premier élément d'accrochage (10) comprend un crochet (14) et **en ce que** le deuxième élément d'accrochage (12) comprend un manchon (15) dans lequel est inséré le crochet (14) dans la position de couplage (PC) de sorte à réaliser un couplage mécanique.

4. Ensemble selon la revendication 2 ou la revendication 3, **caractérisé en ce que** le premier élément d'accrochage (10) comprend un premier aimant (16) ou une première pièce aimantable et le deuxième élément d'accrochage (12) comprend un deuxième aimant (17) ou une deuxième pièce aimantable, le premier aimant (16) et le deuxième aimant (17) ou le premier aimant (16) et la deuxième pièce aimantable ou la première pièce aimantable et le deuxième aimant (17) étant aimantés l'un à l'autre dans la position de couplage (PC) de sorte à réaliser un couplage magnétique.

5. Ensemble selon l'une quelconque des revendications 1 à 4, **caractérisé en ce qu'**il comprend un seul élément semeur (1) associé à une seule trémie (2, 2') individuelle ou intermédiaire et un seul dispositif de rangement (9).

6. Ensemble selon l'une quelconque des revendications 1 à 4, **caractérisé en ce qu'**il comprend une pluralité d'éléments semeurs (1) et une pluralité de trémies (2) individuelles et une pluralité de dispositifs de rangement (9), chaque élément semeur (1) étant associé à une trémie (2) de sorte à former un sous-ensemble et comportant un dispositif de rangement (9) dédié pour chaque porte (7).

7. Ensemble selon l'une quelconque des revendications 1 à 4, **caractérisé en ce qu'**il comprend une pluralité d'éléments semeurs (1), un seul réservoir central et une pluralité de trémies (2') intermédiaires, chaque élément semeur (1) étant raccordé au réservoir central et une pluralité de dispositifs de rangement (9), chaque élément semeur (1) étant associé à une trémie (2') intermédiaire de sorte à former un sous-ensemble et comportant un dispositif de rangement (9) dédié pour chaque porte (7).

8. Semoir comprenant au moins l'ensemble comprenant au moins un élément semeur (1), au moins une trémie (2, 2') et un châssis-poutre, **caractérisé en ce que** l'ensemble est selon l'une quelconque des revendications 1 à 7.
